# EUROPEAN PATENT APPLICATION

(11) **EP 4 560 500 A1**
(43) Date of publication of application: **28.05.2025**
(21) Application number: 23307034.1
(22) Date of filing: 22.11.2023
(51) Int. Cl.: G06F 21/31, H04L 9/32

(54) **SYSTEM AND METHOD FOR SELF ISSUED VERIFIABLE CREDENTIALS**

(71) Applicant: THALES DIS FRANCE SAS, 92190 Meudon (FR)
(72) Inventor: AUNG, Khaing Phyo, 689685 Singapore (SG); OROZCO, Paul Sydney, 579724 Singapore (SG); SADAGOPAN, Sridharan, 680274 Singapore (SG)
(74) Representative: Quintero Romero, Manuel

(57) **Abstract**

The present invention provides a system or method for self-issued verifiable credentials (VC) can include a tamper-proof environment in the form of a secure element or trusted execution environment (SE/TEE) within or operatively coupled to an application and a master verifiable credential template secured and protected from unauthorized modification of credential data or from unauthorized modification of secrets of the master verifiable credential template, where the master verifiable credential template is a trusted application securely delegated by an issuer and executed inside the tamper-proof environment within a user's premises to issue a self-issued verifiable credential upon a verifiable presentation request by a verifier. The user's premises can be a client device or element such as a smart phone, a mobile phone, a subscriber identity module, a smart card, a lap top computer, a notebook computer, or a tablet computer.

## Description

### TECHNICAL FIELD

The present disclosure generally relates to issuance of verifiable credentials. More particularly, but not exclusively, the present disclosure relates to a system and method of self-issued verifiable credentials.

### BACKGROUND OF THE INVENTION

Verifiable Credentials (VCs) are used to assert information that a holder is licensed and capable of operating a motor vehicle, or that the holder attained a level of university education, or that a holder has a government-issued passport enabling the holder to travel between countries. A VC provides benefits in the physical world and is expanding to online or web-based arenas such as where third-party verified machine-readable personal information is provided on the Web. The VC specification provides a standard way to express credentials on the Web in a way that is cryptographically secure, privacy respecting, and machine verifiable. Some of the use cases for VCs are similar or the same such as information related to identifying the subject of the credential (for example, a photo, name, or identification number), information related to the issuing authority (for example, a city government, national agency, or certification body), and information related to the type of credential this is (for example, a Dutch passport, an American driving license, or a health insurance card).

A verifiable credential can represent all of the same information that a physical credential represents. The addition of technologies, such as digital signatures, makes verifiable credentials more tamper evident and more trustworthy than their physical counterparts. Holders of verifiable credentials can generate verifiable presentations and then share these verifiable presentations with verifiers to prove they possess verifiable credentials with certain characteristics.

The word "verifiable" in the terms verifiable credential and verifiable presentation refers to the characteristic of a credential or presentation as being able to be verified by a verifier. Verifiability of a credential does not imply that the truth of claims encoded therein can be evaluated; however, the issuer can include values in the evidence property to help the verifier apply their business logic to determine whether the claims have sufficient veracity for their needs.

On demand VC issuance can occur on an issuer's server causing a bit of an inconvenience for a holder every time a holder wants to provide a verifiable presentation since a connection would be required to the issuer where the holder alone owns a master key pair or master ID deterministic from seed. In other words, the user needs to know the master key or seed to derive child keys.

Normally, VCs are issued and/or signed directly by issuers at the issuers' premises (a trusted environment such as a server or backend system). Relying solely on the issuers' premises as a trusted environment can cause great inconvenience in many scenarios where verification is desired rapidly or virtually instantly or where numerous verifications are desired at the same time.

### SUMMARY OF THE INVENTION

The present invention provides a solution for the aforementioned problems by a system for self-issued verifiable credentials according to claim 1, a computer-implemented method according to claim 12, and a system for presenting a verifiable presentation to a verifier using self-issued verifiable credentials according to claim 15. In dependent claims, preferred embodiments of the invention are defined.

In a first aspect, the invention provides a system for self-issued verifiable credentials (VC) can include a tamper-proof environment in the form of a secure element or trusted execution environment (SE/TEE) within or operatively coupled to an application and a master verifiable credential template secured and protected from unauthorized modification of credential data or from unauthorized modification of secrets of the master verifiable credential template, where the master verifiable credential template is a trusted application securely delegated by an issuer and executed inside the tamper-proof environment within a user's premises to issue a self-issued verifiable credential upon a verifiable presentation request by a verifier. This avoids having to issue a VC at the issuers' premises and yet still offers integrity, authenticity, and privacy for issuers and holders at a level beyond any other known self-issued VC.

In some embodiments, the system further includes one or more processors operatively coupled to memory having computer instructions which when executed by the one or more processors causes the one or more processors to perform the function of self-generating a fresh verifiable credential upon a request for a verifiable presentation from the verifier. In some embodiments, each of the fresh verifiable credentials have unique and different identities.

In some embodiments, the secure element or the trusted execution environment ensures that the self-issued verifiable credential only contains valid data and valid claims based on the master verifiable credential template and the verifiable presentation request from a verifier.

In some embodiments, the user's premises is one of a mobile phone, a Subscriber Identity Module (SIM) card, a smart card, a lap top computer, a notebook computer, or a tablet computer or essentially any client device owned or operated by a holder or user.

In some embodiments, the application self-issues a new subsequent verifiable credential without contacting the issuer. After the initial set up using a Master VC template, the self-issued VCs can be issued independent of the issuer.

In some embodiments, the system ensures: (a) **integrity** by preventing a user from modifying credential data or credential claims; (b) **authenticity** by enabling verifiers to cryptographically validate a connection or link between the self-issued verifiable credential issued and signed inside the tamper-proof environment and the issuer, and; (c) **privacy** by preventing the verifiers from checking signatures or other information contained within or otherwise correlating information from the self-issued verifiable credentials.

In some embodiments, the system ensures privacy by using a cryptographic proof/signature of a one-time distributed identity (DID) that is verified against an issuer/secure environment/or trusted execution environment owner's public key information that does not allow any linkage or traceability back to a particular secure environment or back to a trusted execution environment.

In some embodiments, the verifier verifies a cryptographic proof/signature with an issuer's public key where the verifier is unable to link or trace the proof/signature back to a particular tamper proof environment (SE/TEE).

In some embodiments, the verifier verifies a cryptographic proof/signature with an issuer's white-box key where the verifier is unable to link or trace the proof/signature back to a particular tamper-proof environment (SE/TEE).

In some embodiments, the verifier verifies a cryptographic proof/signature with ring/group information where the verifier is unable to link or trace the proof/signature back to a particular tamper-proof environment (SE/TEE). In some embodiments, the user/holder is able to be selective as to which portions of metadata or other information in the ring or group is to be verified or validated. In some embodiments, the user/holder is able to be selective as to which member's metadata or other information among the members of the ring or group is to have their information verified or validated.

In some embodiments, a system for presenting a verifiable presentation to a verifier using a self-issued verifiable credentials includes a secure element or trusted execution environment within or operatively coupled to an application operating within a client device, a master verifiable credential template in a tamper-proof environment of the secure element or the trusted execution environment, and one or more processors operatively coupled to memory having computer instructions which when executed by the one or more processors causes the one or more processors at the client device to perform certain functions. In some embodiments, the functions include receiving the master verifiable credential template, generating and signing the self-issued verifiable credential in the tamper-proof environment responsive to a verifiable presentation request for the verifiable presentation from the verifier, and presenting the verifiable presentation to the verifier using the self-issued credential, wherein the master verifiable credential template is a trusted application securely delegated by an issuer and executed inside the tamper-proof environment within the client device.

In a second aspect, the invention provides a computer implemented method of presenting a verifiable presentation using a self-issued verifiable credential using one or more processors operatively coupled to memory having computer instructions which when executed by the one or more processors causes the one or more processors at a client device of a holder to perform the functions of receiving a master verifiable credential template secured and protected from unauthorized modification of credential data or from unauthorized modification of secrets of the master verifiable credential template, generating and signing the self-issued verifiable credential in a tamper-proof environment within or operatively coupled to an application within a user's or holder's client device upon a verifiable presentation request for a verifiable presentation from a verifier, and presenting the verifiable presentation to the verifier using the self-issued credential, wherein the master verifiable credential template is a trusted application securely delegated by an issuer and executed inside the tamper-proof environment within the user's or holder's client device.

In some embodiments, the tamper-proof environment is a secure element or a trusted execution environment.

In a third aspect, the invention provides a memory which further comprises computer instructions which when executed by the one or more processors causes the one or more processors to perform the function of self-generating a fresh verifiable credential upon a new request for a verifiable presentation from a verifier.

All the features described in this specification (including the claims, description, and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
FIG. 1 illustrates a block diagram of a basic verifiable credential (VC) ecosystem system and flow;
FIG. 2 illustrates a block diagram and flow of a system using a self-issued verifiable credential in accordance with the embodiments;
FIG. 3 illustrates a further detailed block diagram and flow of the system of FIG. 2 in accordance with the embodiments;
FIG. 4A illustrates a block diagram of a tamper-proof environment using a secure element or trusted execution environment in accordance with the embodiments;
FIG. 4B illustrates a block diagram of a tamper-proof environment using a white-box in accordance with the embodiments;
FIG. 5A illustrates a flow diagram where the same verifiable credential is used across multiple verifiers to mitigate de-anonymization issues;
FIG. 5B illustrates a flow diagram where a short-lived, single-use verifiable credentials used frequently can allow an issuer to determine behavior correlation that can negatively impact a user;
FIG. 5C illustrates a flow diagram that has a self-issued verifiable credential in accordance with the embodiments and without some of the detriments of the embodiments in FIGs. 5A and 5B;
FIG. 6 is a block diagram of a verifiable credential (VC) illustrating privacy improvements of a delegated VC over a normal VC in accordance with the embodiments;
FIG. 7 illustrates a block diagram of a verifiable credential set up in a tamper-proof environment using a secure element or trusted execution environment ensuring integrity in accordance with the embodiments;
FIG. 8 illustrates a block diagram of a verifiable credential set up in a tamper-proof environment using a secure element or trusted execution environment ensuring authenticity in accordance with the embodiments;
FIG. 9 illustrates a block diagram of a verifiable credential set up in a tamper-proof environment using a secure element or trusted execution environment ensuring verification and privacy in accordance with the embodiments;
FIG. 10 illustrates a block diagram and flow of a method of providing unlinkability for an issuer's delegated key or secret using a same asymmetric private key in accordance with the embodiments;
FIG. 11 illustrates a block diagram and flow of a method of providing unlinkability for an issuer's delegated key or secret using a symmetric key or secret and white-box in accordance with the embodiments; and
FIG. 12 illustrates a block diagram and flow of a method of providing unlinkability for an issuer's delegated key or secret using a ring or group signature scheme in accordance with the embodiments.

### DETAILED DESCRIPTION OF THE INVENTION

As it will be appreciated by one skilled in the art, aspects of the present invention may be embodied as a system for self-issued verifiable credentials, a computer-implemented method, or a system for presenting a verifiable presentation to a verifier using self-issued verifiable credentials.

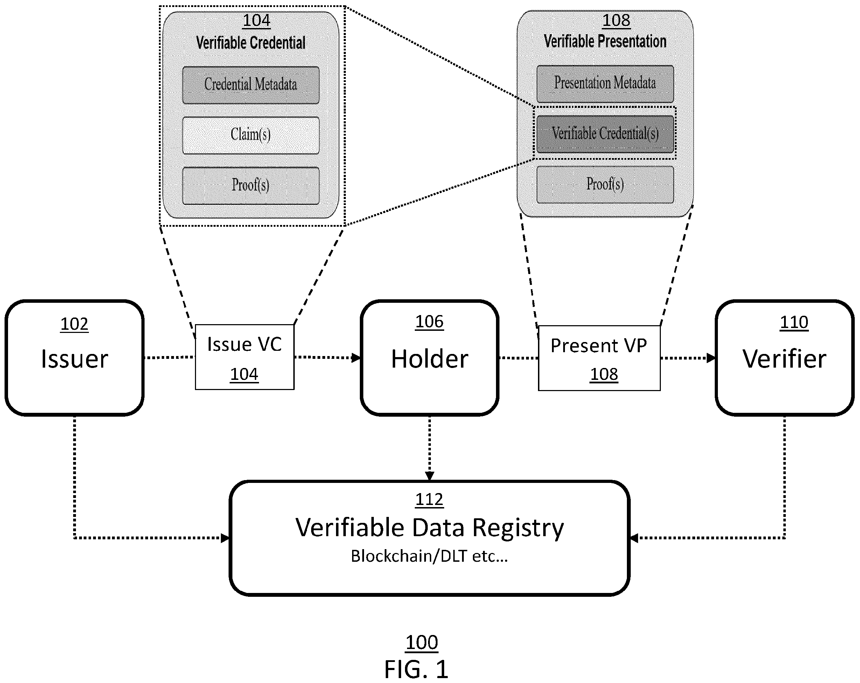

Referring to **FIG. 1**, a verifiable credential or VC 104 is a set of one or more claims/attributes made by an issuer 102. A verifiable credential is a tamper-evident credential that has authorship that can be cryptographically verified. Verifiable credentials can be used to build verifiable presentations 108, which can also be cryptographically verified. The claims in a credential can be about different subjects.

A VC Presentation 108 includes data derived from one or more verifiable credentials 104, issued by one or more issuers that are shared with a specific verifier 110. A verifiable presentation 108 is a tamper-evident presentation encoded in such a way that authorship of the data can be trusted after a process of cryptographic verification. Certain types of verifiable presentations might contain data that is synthesized from, but do not contain, the original verifiable credentials (for example, zero-knowledge proofs). Thus, a holder 106 of an issued VC 104 from an Issuer 102 can present a verified presentation 108 to a verifier 110. The Issuer 102 and Verifier 110 can use a verifiable data registry 112 to verify information contained in the verifiable presentation.

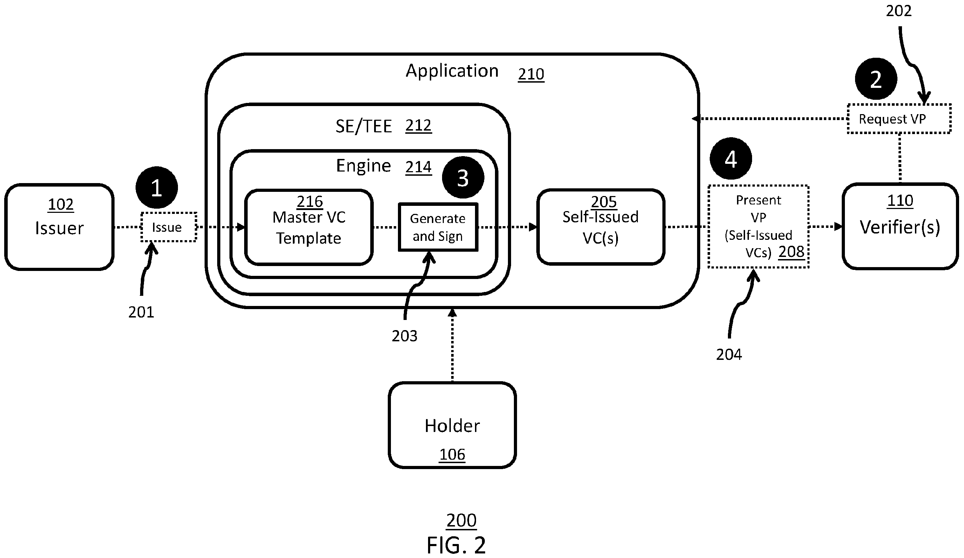

Normally, VCs are issued/signed directly by Issuers (102) at Issuers' premises (Trusted Environments such as Server/Backend). In contrast, in Delegated VC Issuance as illustrated by system and flow chart 200 of **FIG. 2** in accordance with some of the embodiments, VCs are issued/signed from a Master VC Template 216 which is a trusted application securely delegated by Issuer 102 and executed inside trusted/tamper-proof environments such as SE/TEE at Users' premises such as Mobile Phones/SIM Card/Smart Card, etc.).

More particularly and operationally, the system 200 would initiate by having an issuer 102 issue at a first step 201 a master VC template 216 that would reside within an engine 214 of a tamper-proof environment 212 such as the secure element or trusted execution environment (SE/TEE) as shown. The tamper-proof environment can reside within an application 210 of a mobile phone, SIM card, smart card or other client device of a holder 106. In response to receiving a request at a second step 202 from a verifier or verifiers 110 for a verifiable presentation, the engine 214 at a third step 203 generates and signs a self-issued VC or VCs 205 which is used at a fourth step 204 by the verifiable presentation 208 to present the VP 208 to the verifier(s) 110.

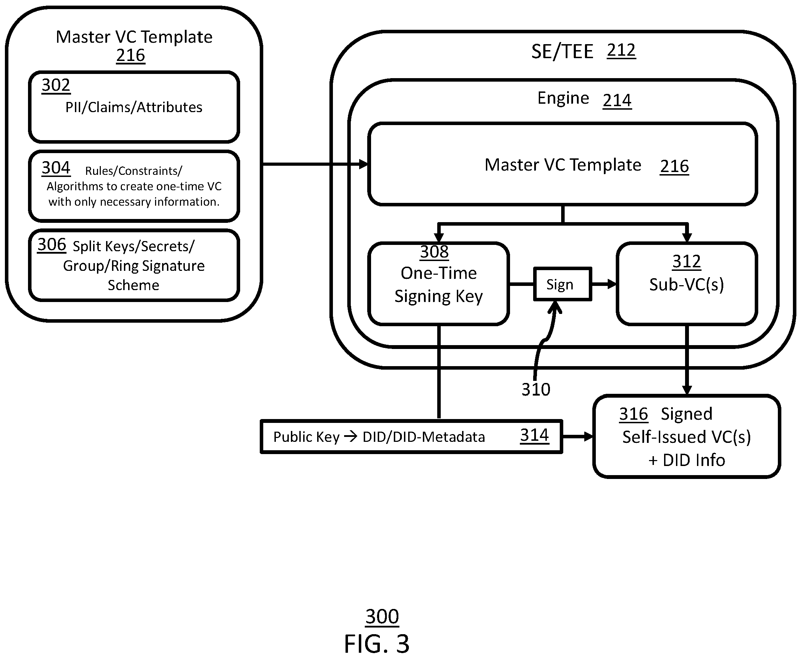

**FIG. 3** presents a more detailed block diagram and flow 300 of the system 200 of FIG. 2 and more particularly the details of the master VC template 216 and tamper proof environment 212. In some embodiments, the master VC template 216 can include personally identifiable information (PII), claims, and/or attributes 302, and rules/constraints/or algorithms 304 to create one-time VC with only necessary information, as well as split keys/secrets/group/ring signature schemes 306. In some embodiments, the master VC template 216 can use a one-time signing key 308 to sign (310) sub-VCs 312. In some embodiments, the system 300 encodes a public key directly as a distributed identifier (DID) value, and generates a DID Metadata 314 in a deterministic way from that key. The only material that has to be generated or stored when using this method is the public key or DID itself; either can derive the other and the DID Metadata. The DID Metadata 314 can be used to provide signed self-issued VC(s) with DID information 316.

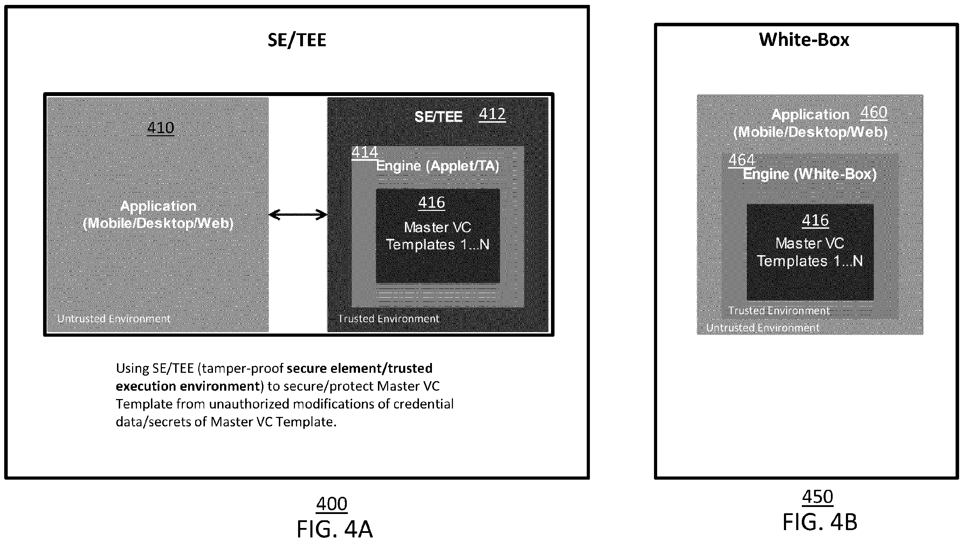

Within contemplation of the embodiments, the Master VC Templates can be arranged in various tamper-proof environments. In some embodiments as illustrated by the environment 400 of **FIG. 4A**, a Master VC 416 can reside within an engine 414 such as an applet or trusted application that can reside within a tamper-proof environment 412 that can be a secure element or trusted execution environment. The tamper-proof environment 412 can interface with an untrusted environment 410 which can be a typical application on a mobile phone, desktop, or online or cloud based application. The SE/TEE (tamper-proof secure element/trusted execution environment 412) can be used to secure/protect the Master VC Template 416 from unauthorized modifications of credential data/secrets of the Master VC Template 416.

In some embodiments as illustrated in system 450 of **FIG. 4B**, the Master VC Template(s) 416 can reside within an engine 464 such as a White-Box that serves as a trusted environment that resides within an untrusted environment that can be an application 460.

The technical problem with existing verifiable credential or VC schemes is that verifiable credentials might contain long-lived identifiers that could be used to correlate individuals. These types of identifiers include verifiable credential-specific identifiers such as subject identifiers, credential identifiers, and credential proofs, among other information. Those holder-specific identifiers such as email addresses, government-issued identifiers, organization-issued identifiers, addresses, healthcare vitals, and many other sorts of long-lived identifiers can create susceptibilities or future susceptibilities.

A subject identifier (credential.credentialSubject.id) of a credential used to identify a subject creates a greater risk of correlation when the identifiers are long-lived or used across multiple presentations, verifiers or web domains. Even when different credentials are presented, if the subject identifier is the same, verifiers (and those with access to verifier logs) could infer that the holder of the credential is the same person.

Similarly, disclosing the credential identifier (credential.id) leads to situations where multiple verifiers, or an issuer and a verifier, can collude to correlate the holder.

The contents of verifiable credentials are secured using the (credential.proof) field. The properties in this field create a greater risk of correlation when the same values are used across more than one session or domain and the value does not change. Examples include the fields for verificationMethod, created, proofPurpose, and jws.

In addition, the following usage patterns of verifiable credentials can potentially lead to de-anonymization and a loss of privacy. This correlation can occur when: (a) The same verifiable credential is presented to the same verifier more than once. The verifier could infer that the holder is the same individual; (b) The same verifiable credential is presented to different verifiers, and either those verifiers collude or a third party has access to transaction records from both verifiers. An observant party could infer that the individual presenting the verifiable credential is the same person at both services. That is, the same person controls the accounts; and/or (c) Passing the identifier of a credential to a centralized revocation server. The centralized server can correlate the credential usage across interactions. For example, if a credential is used for proof of age in this manner, the centralized service could know everywhere that credential was presented (all liquor stores, bars, adult stores, lottery purchases, and so on).

Although there are some common recommendations and solutions to alleviate the privacy, de-anonymization and correlation problems, such recommendations and solutions do not fully resolve all the issue encountered. Again, it is possible to mitigate this de-anonymization, loss of privacy and correlation by using some of the following mechanisms, which will help further demonstrate the further utility and benefits of the embodiments.

For example, one mechanism is using short-lived, single-use verifiable credential/bearer credential, using a globally-unique identifier as the subject for any given credential and never re-use that credential. Another mechanism involves avoiding the association of personally identifiable information with any specific long-lived subject identifier. Using single-use verifiable credentials provides several benefits. The first benefit is to verifiers who can be sure that the data in a verifiable credential is fresh. The second benefit is to holders, who know that if there are no long-lived identifiers in the verifiable credential, the verifiable credential itself cannot be used to track or correlate them online. Finally, there is nothing for attackers to steal, making the entire ecosystem safer to operate within.

Another protective mechanism is selective disclosure where only the information necessary for interaction with the verifier is to be disclosed by the holder.

Yet another mechanism has signature values and metadata regenerated each time using technologies like third-party pairwise signatures, zero-knowledge proofs, or group signatures.

If the credential supports revocation, another mechanism can use a globally-distributed service for revocation where revocation APIs are designed that do not depend on submitting the ID of the credential. For example, using a revocation list instead of a query.

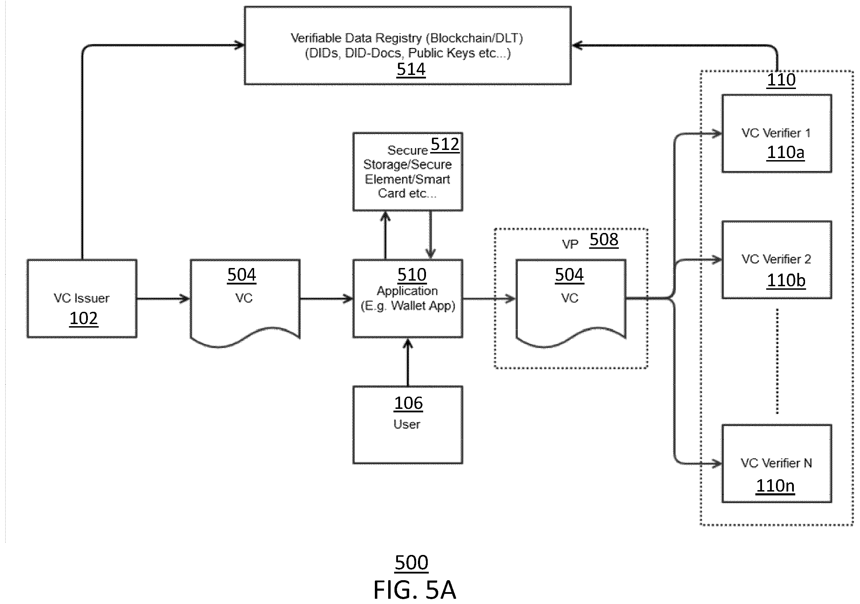

**FIG. 5A** illustrates a system 500 where the same verifiable credential 504 is used across multiple verifiers (110a through 110n of 110) where an issuer 102 issues the VC 504 via an application 510 (such as a wallet app) and secure environment 512 to provide a verifiable presentation 508 (having the VC 504) to (one or more of) a number of verifiers (110a - 110n). The issuer 102 and verifier can cryptographically use a verifiable data registry 514 to verify the information from the VC 504.

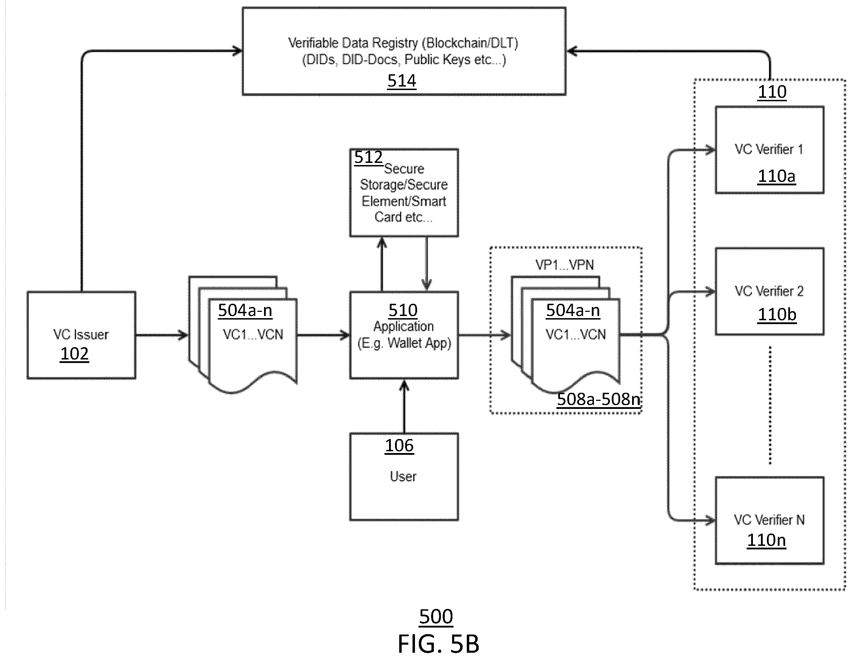

**FIG. 5B** illustrates a similar system 500 to the system 500 of FIG. 5A where a different technical problem arises related to frequency of claim issuance.

If short-lived credentials are used repeatedly, such scenario could result in **behavior correlation**. For example, an **ageOver** verifiable credential is useful for gaining access to a bar. If an issuer issues such a verifiable credential with **a very short expiration date and an automatic renewal mechanism**, then the issuer could possibly correlate the behavior of the holder in a way that negatively impacts the holder. Issuers should avoid issuing credentials in a way that enables them to correlate usage patterns. In FIG. 5B, the same verifiable credentials 504a-n are used across multiple verifiers (110a through 110n of 110) where the issuer 102 issues the corresponding VCs 504a-n via the application 510 (such as a wallet app) and secure environment 512 to provide the corresponding verifiable presentations 508a-n (having the VCs 504a-n) to a number of verifiers (110a - 1 10n). The issuer 102 and verifier can cryptographically use the verifiable data registry 514 to verify the information from the VC 504.

This kind of correlation can be mitigated when a holder 106 uses a verifiable credential without the knowledge of the issuer.

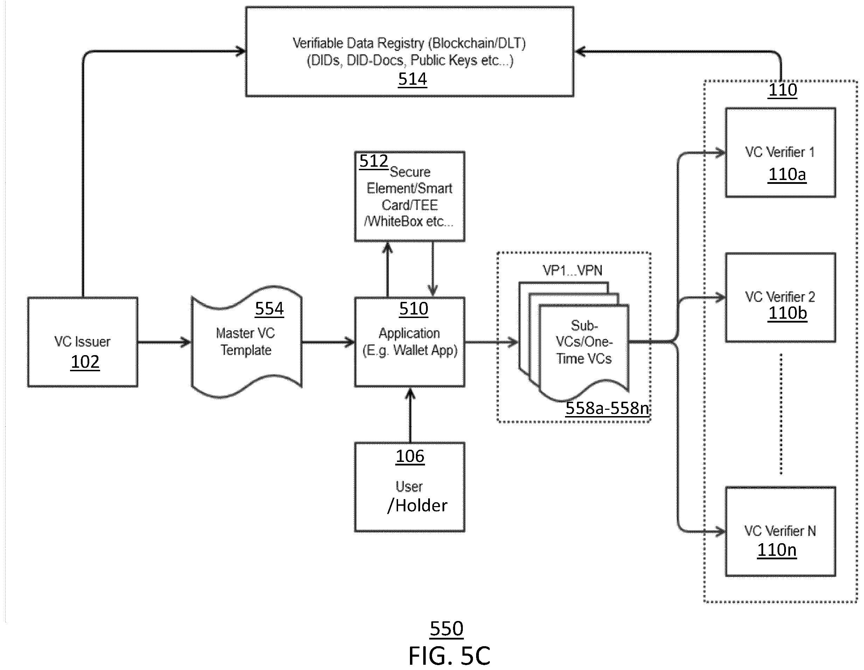

The embodiments herein as illustrated by the system 550 of **FIG. 5C** overcome the detriments noted above by allowing a holder 106 to issue short-lived/single-use verifiable credentials themselves, based on a master verifiable credential template 554 from issuer 102 by using a tamper-proof environment 512 such as a Secure Element/Smart Card/TEE or Whitebox cryptography, without the knowledge of issuer. The tamper-proof environment works in tandem with the application 510 (such as a wallet application) to issue VPs (558an) having corresponding sub-VCs or one-time VCs to the corresponding verifiers (110a-n).

In such an instance, the Holder 106 will be able to hide/edit/replace/modify those long-lived identifiers and other holder specific attributes according to the limits/rules/ranges specified in master verifiable credential template 554 issued by issuer 102.

Using Secure Element/Smart Card/TEE or Whitebox cryptography (512) will prevent malicious holders trying to modify and issue verifiable credentials beyond the limits/ranges/rules specified in master verifiable credential template 554. As noted, some embodiments will have a tamper proof environment using Secure Element/Smart Card/TEE. Some embodiments can alternatively use White-box Cryptography

Note that using Secure Element/Smart Card/TEE, and Whitebox Cryptography are two separate/different ways. Using Whitebox Cryptography is generally considered a cheaper alternative or way or where a Secure Element/Smart Card/TEE based system are not available.

The embodiments described above provide advantages for the Issuer and Holder in particular. For the issuer, there is only a single issue (of the master verifiable credential template), where the holder issues sub-VCs/short-lived/single-use privacy-enhanced verifiable credentials multiple times themselves whenever they need. Inherently, the embodiments provide a lesser issuing workload for the issuer thereby providing cost savings and better efficiency.

The advantages with respect to the Holder revolves around better privacy. The Holder is able to issue short-lived/single-use verifiable credentials without the knowledge of the issuer in a manner that is faster and easier. Furthermore, the issuance of the VC can be an offline verifiable credential issuance.

The general advantages include an ability to use well-known/certified algorithms, which are already supported in Secure Element/Smart Card and TEE standards/specifications. The embodiments can also alternatively use Whitebox cryptography instead of using the Secure Element/Smart Card/TEE environment for the same use case.

In some embodiments, there is no need to use cryptography algorithms (e.g. BBS+ signature), which are not yet certified, but widely used in banking and government solutions/products. Note, however, that using Blackbox (such as Secure Element/Smart Card/TEE) will have more free options or ranges and be free of limitations than using cryptography algorithms.

In summary, the embodiments can involve Issuing/Deriving Sub-VCs/One-Time VCs from a Master VC Template, which is stored and processed in a tamper-proof environment such as one or more of Secure Element/Smart Card/TEE/Whitebox cryptography. In some embodiments, the Master VC Template design and implementation would use one or more of Secure Element/Smart Card/TEE, and Whitebox Cryptography. In some embodiments, the system would issue the Master VC Template into a Secure Element/Smart Card/TEE. In some embodiments, the system would issue the Master VC Template as Whitebox Cryptography. In yet other embodiments, the system would issue or derive Sub-VCs/One-Time VCs from Master VC Template.

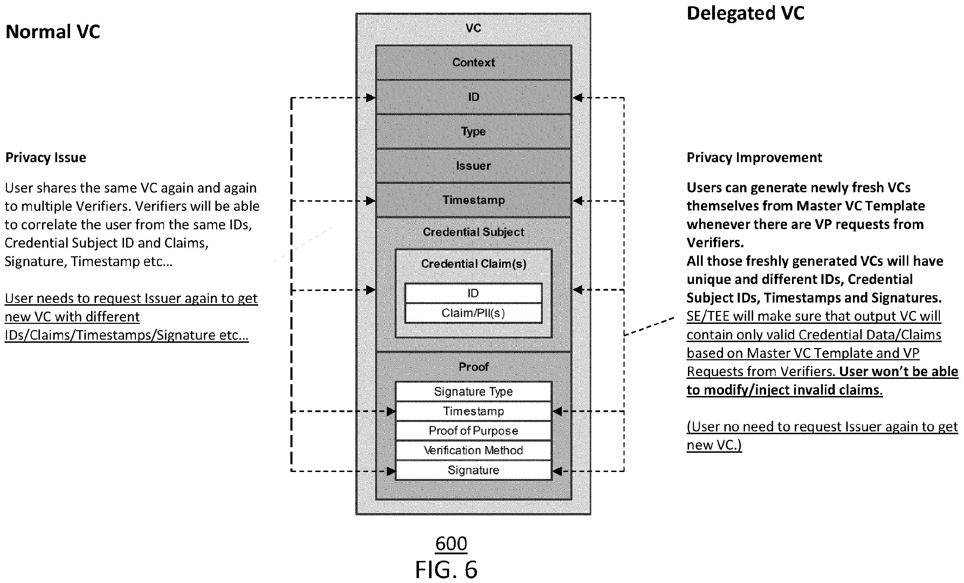

**FIG. 6** illustrates an exemplary Verifiable Credential or VC 600 having any number of elements including metadata, credential subject or claims, and proofs. The metadata can include context, identifiers, type, issuer, and timestamp as examples. The credential subject can include claims such as identity or identities and claims which can include personally identifying information (PII). The proof can include signature type, timestamp, proof of purpose, verification method and a signature.

**FIG. 6** further illustrates the benefits or improvements to privacy from using a normal VC versus a delegated (self-issued) VC. In a normal VC, the user or holder shares the same VC again and again to multiple verifiers. Verifiers will be able to correlate the user/holder from the same IDs, credential subject ID and claims, signature, timestamp, etc.

Furthermore, the user/holder using a normal VC would need to request that an issuer get a new VC with different IDs/Claims/Timestamps/Signatures, etc again and again. With the delegated VC, privacy is improved by allowing users/holders to generate newly fresh VCs themselves from a Master VC Templace whenever there are VP requests from Verifiers.

All those freshly generated VCs will have unique and different IDs, Credential Subject IDs, Timestamps and Signatures. Additionally, the tamper-proof environment such as the SE/TEE will ensure that the output VC will contain only valid Credential Data/Claims based on the Master VC Template and VP Requests from Verifiers. The User/Holder will not be able to modify/inject invalid claims. Furthermore, the User/Holder will not need to request a new VC from the Issuer.

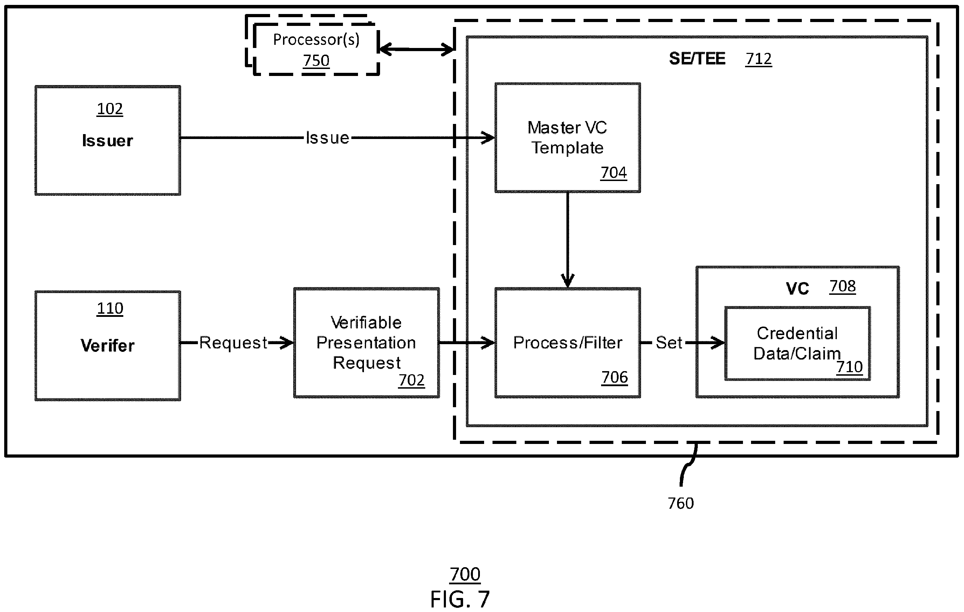

**FIG. 7** depicts a block diagram of a system 700 for initiating a verifiable credential 708 set up in a tamper-proof environment 712 using a secure element or trusted execution environment ensuring integrity in accordance with the embodiments.

In a Delegated VC Issuance, VCs (708) are issued and signed from Master VC Templates 704, which are securely delegated by Issuers 102 to particular SEs/TEEs, and executed inside those tamper-proof/trusted environments (712). The VCs 708 are issued and signed in response to a verifier 110 making a verifiable presentation request 702 to the tamper-proof environment 712 via the process/filter 706. The VC 708 would contain credential data and claims 710. In some embodiments, the system 700 further includes one or more processors 750 operatively coupled to memory 760 having computer instructions which when executed by the one or more processors causes the one or more processors to perform the function of self generating a fresh verifiable credential upon a request or for every request for a verifiable presentation from the verifier. In some embodiments, each of the fresh verifiable credentials has unique and different identities.

The embodiments provide three important attributes, namely Integrity, Authenticity, and Privacy.

With respect to **Integrity**: Output VCs (Delegated VCs) 708 must contain only valid credential data/claims 710 based on the Master VC Template (what it has, 708) and VP Request (what it requests, 702) from Verifiers 110. The user or holder must not be able to modify/inject any invalid credential claims.

With respect to **Authenticity**: Verifiers 110 must be able to verify/validate cryptographically the connection/link between output VCs (Delegated VCs 708 - which are issued/signed inside SE/TEEs 712 which are delegated by Issuer 102) and Issuer itself.

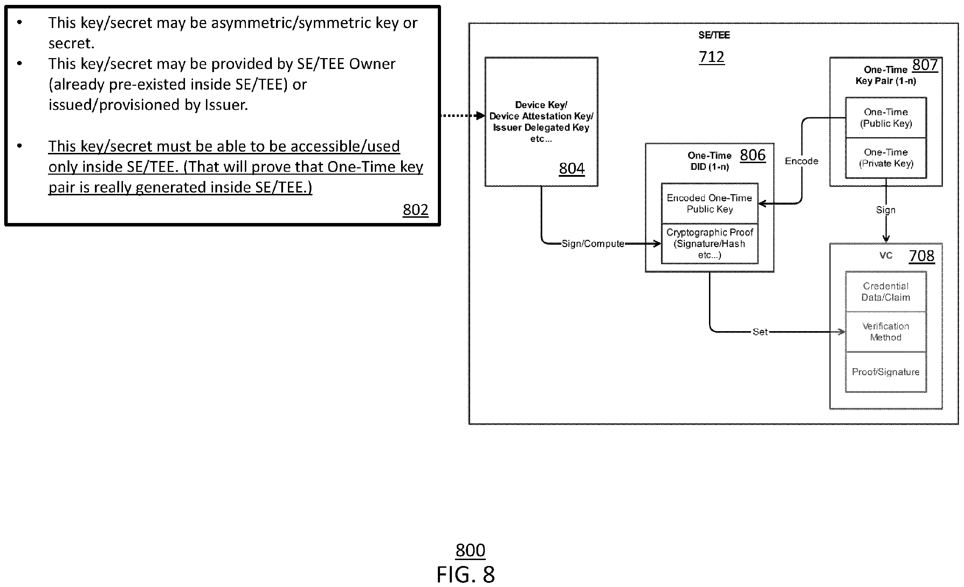

In some embodiments as illustrated by the system 800 of FIG. 8, a key or secret 802 may be either an asymmetric or symmetric key or a secret. The key or secret may be provided by the SE/TEE (tamper-proof environment) owner where the key or secret is already pre-existing inside the SE/TEE or issued or provisioned by the Issuer. The key or secret must be able to be accessible or used only inside the SE/TEE. That would prove that the one-time key pair is really generated inside the SE/TEE 712. As shown, the device key or device attestation key or issuer delegated key 804 signs or computes the cryptographic proof within the one-time DID (1-n) 806 while the one-time key pair (1-n) 807 uses its one-time public key to encode the Encoded one-time public key of the one-time DID (1-n) 806 and uses its One-Time private key to sign the VC 708 in order for the One-Time DID 806 to set and verify the VC 708.

With respect to **Privacy**: Verifiers 110 must not be able to correlate output VCs (Delegated VCs 710) that are issued/signed inside the same SE/TEE 712 or from the same person/entity by checking signatures/other information contained inside VCs 708.

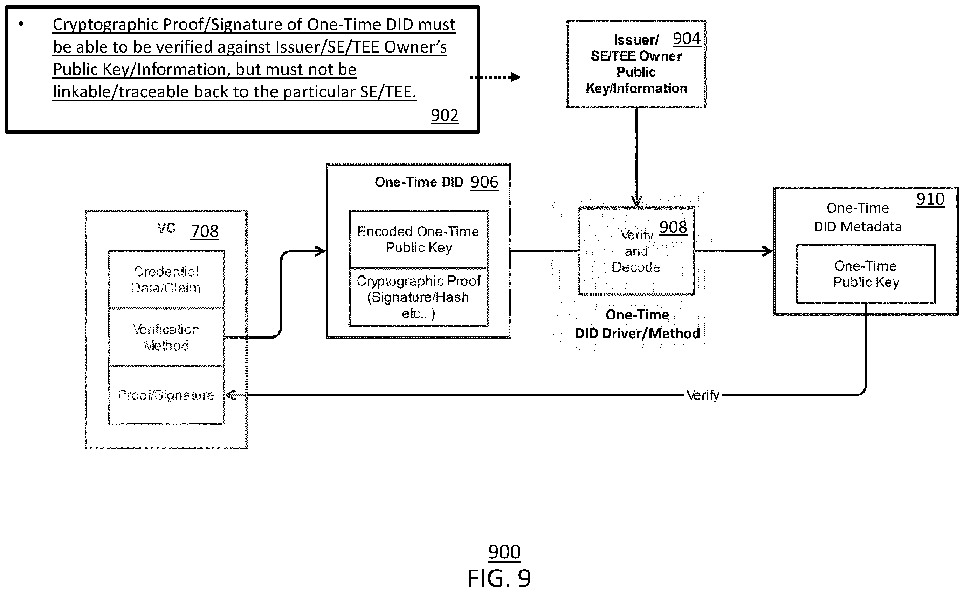

In some embodiments as illustrated by the system or method 900 of FIG. 9, a cryptographic proof/signature 902 of a One-Time DID must be able to be verified against Issuer/SE/TEE Owner's Public Key/Information, but should not be linkable or traceable back to the particular SE/TEE. The Issuer/SE/TEE Owner public key and information 904 is provided to the verify and decode module 908 which generates the one-time DID metadata 910 that has a one-time public key that is used to verify the proof/signature of the VC 708. The One-Time DID 906 also uses the verification method from the VC 708 along with the encoded one-time public key and cryptographic proof to enable the verification process as shown while still affording privacy to the user/holder.

In some SE/TEEs, the Device/Device Attestation Key might be already exist inside.

If the Device/Device Attestation Key already exists and supports unlinkability (able to verify authenticity as a group of SE/TEE, but not as a particular SE/TEE), then the Issuer has no need to issue or provision its own Delegated Key/Secret inside the SE/TEE.

However, if the existing Device/Device Attestation Key does not support unlinkability, Issuer will need to issue or provision its own Delegated Key/Secret inside the SE/TEE.

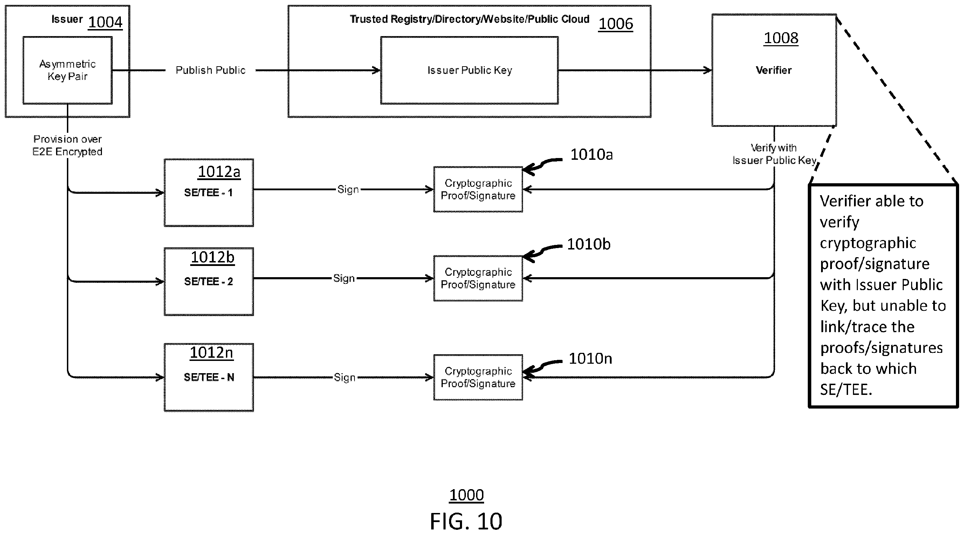

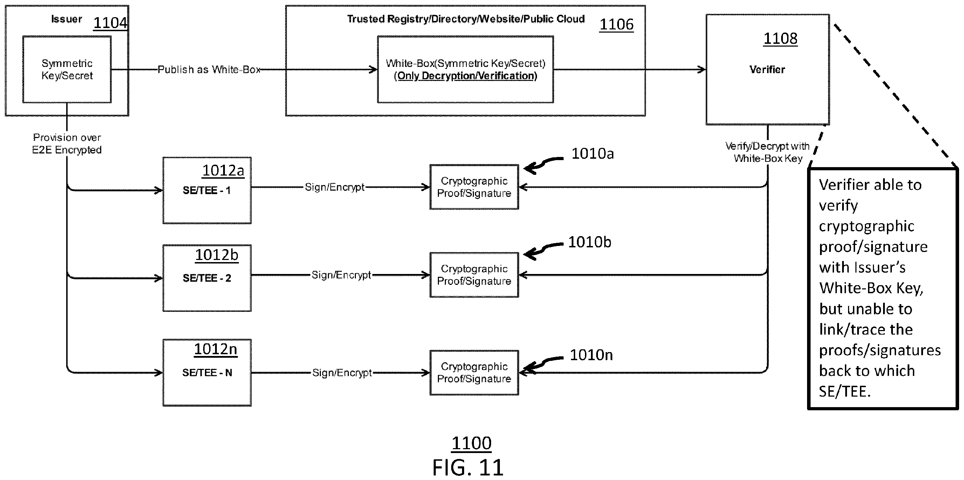

The following three (3) different mechanisms can be used to provide unlinkability for an Issuer's Delegated Key/Secret.
(1) Using Same Asymmetric Private Key. As illustrated in the system 1000 of FIG. 10, an issuer 1004 can provision the same asymmetric private key into multiple SE/TEEs (1012an) over an end-to-end (E2E) encrypted/secure channel, therefore, all the signatures from those SE/TEEs can be verified with single public key which the verifier 1008 can verify with the issuer public key from the trusted registry 1006. The verifier 1008 is able to verify cryptographic proof/signature (1010a-n) with issuer's public key, but unable to link or trace the proofs or signatures back to which specific SE/TEE.
(2) Using Symmetric Key/Secret + White-Box. The verifier is able to verify cryptographic proof/signature with issuer's white-box key, but unable to link or trace back the proofs/signatures back to the specific SE/TEE. As illustrated in the system 1100 of FIG. 11, similar to the system 100 of FIG. 10, an issuer 1104 can provision a symmetric key or secret multiple SE/TEEs (1012a-n) over an end-to-end (E2E) encrypted/secure channel using cryptographic proof/signatures 101a-n, therefore, all the signatures from those SE/TEEs can be verified with single white-box key or symmetric key or secret from a trusted registry 1106 which the verifier 1108 can verify with the issuer public key from the trusted registry 1006. The verifier 1108 is able to verify cryptographic proof/signature (1010a-n) with issuer's white-box key, but still unable to link or trace the proofs or signatures back to which specific SE/TEE. Such embodiment is simple and able to be applied/used in production.
(3) Using a Ring/Group Signature Scheme.

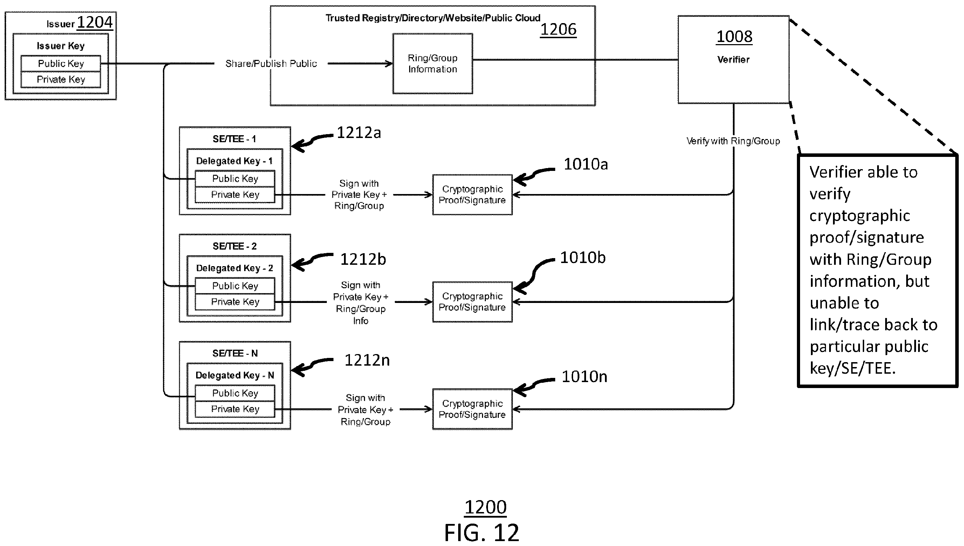

The system 1200 of FIG. 12 illustrates a complex, challenging, embodiment used in production showing the Ring/Group signature scheme.

Issuer 1204 can choose to provision and use its own Delegated Key/Secret inside each respective SE/TEE (1212a-n), whether it has Device/Device Attestation Key or not where each SE/TEE signs with its private key and Ring Group information from the trusted registry 1206. The verifier 1008 is able to verify cryptographic proof/signature (1010a-n) with Ring Group information, yet unable to link or trace back to a particular public key or SE or TEE.

In the absence of any specific clarification related to its express use in a particular context, where the terms " substantial " or " about " or "usually" in any grammatical form are used as modifiers in the present disclosure and any appended claims ( e.g., to modify a structure, a dimension, a measurement, or some other characteristic), it is understood that the characteristic may vary by up to 30 percent if applicable.

The terms "include" and "comprise" as well as derivatives thereof, in all of their syntactic contexts, are to be construed without limitation in an open, inclusive sense, (e.g., "including, but not limited to"). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to".

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea .

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea. Furthermore, when interpreting the claims, the order of the elements may or may not be critical and it can be assumed in many instances that the order of certain functions can be performed either in the order presented in the claims or in a different order within contemplation of the scope of the embodiments.

## Claims

1. A system for self-issued verifiable credentials, **characterized by**:
a secure element or trusted execution environment within or operatively coupled to an application; and
a master verifiable credential template secured and protected from unauthorized modification of credential data or from unauthorized modification of secrets of the master verifiable credential template;
wherein the master verifiable credential template is a trusted application securely delegated by an issuer and executed inside a tamper-proof environment within a user's premises to issue a self-issued verifiable credential upon a verifiable presentation request by a verifier.

2. The system of claim 1, wherein the system further comprises one or more processors operatively coupled to memory having computer instructions which when executed by the one or more processors causes the one or more processors to perform the function of self-generating a fresh verifiable credential upon a request for a verifiable presentation from the verifier.

3. The system of claim 2, wherein each of the fresh verifiable credential has unique and different identities.

4. The system of any of claims 1 to 3, wherein the secure element or the trusted execution environment ensures that the self-issued verifiable credential only contains valid data and valid claims based on the master verifiable credential template and the verifiable presentation request.

5. The system of any of claims 1 to 4, wherein the user's premises is one of a mobile phone, a smart phone, a Subscriber Identity Module (SIM) card, a smart card, a lap top computer, a notebook computer, or a tablet computer.

6. The system of any of claims 1 to 5, wherein the application self-issues a new subsequent verifiable credential without contacting the issuer.

7. The system of any of claims 1 to 6, wherein the system ensures: (a) integrity by preventing a user from modifying credential data or credential claims; (b) authenticity by enabling verifiers to cryptographically validate a connection or link between the self-issued verifiable credential issued and signed inside the tamper-proof environment and the issuer, and; (c) privacy by preventing the verifiers from checking signatures or other information contained within or otherwise correlating information from the self-issued verifiable credentials.

8. The system of any of claims 1 to 7, wherein the system ensures privacy by using a cryptographic proof/signature of a one-time distributed identity (DID) that is verified against an issuer/secure environment/or trusted execution environment owner's public key information that does not allow any linkage or traceability back to a particular secure environment or trusted execution environment.

9. The system of any of claims 1 to 8, wherein the verifier verifies a cryptographic proof/signature with an issuer's public key where the verifier is unable to link or trace the proof/signature back to a particular tamper proof environment (SE/TEE).

10. The system of any of claims 1 to 9, wherein the verifier verifies a cryptographic proof/signature with an issuer's white-box key where the verifier is unable to link or trace the proof/signature back to a particular tamper-proof environment (SE/TEE).

11. The system of any of claims 1 to 10, wherein the verifier verifies a cryptographic proof/signature with ring/group information where the verifier is unable to link or trace the proof/signature back to a particular tamper-proof environment (SE/TEE).

12. A computer implemented method of presenting a verifiable presentation using a self-issued verifiable credential using one or more processors operatively coupled to memory having computer instructions which when executed by the one or more processors causes the one or more processors at a client device of a holder to perform the functions of:
receiving a master verifiable credential template secured and protected from unauthorized modification of credential data or from unauthorized modification of secrets of the master verifiable credential template;
generating and signing the self-issued verifiable credential in a tamper-proof environment within or operatively coupled to an application within a user's or holder's client device upon a verifiable presentation request for a verifiable presentation from a verifier; and
presenting the verifiable presentation to the verifier using the self-issued credential, wherein the master verifiable credential template is a trusted application securely delegated by an issuer and executed inside the tamper-proof environment within the user's or holder's client device.

13. The computer implemented method of claim 12, wherein the tamper-proof environment is a secure element or a trusted execution environment.

14. The computer implemented method of any of claims 12 or 13, wherein the memory further comprises computer instructions which when executed by the one or more processors causes the one or more processors to perform the function of self-generating a fresh verifiable credential upon a new request for a verifiable presentation from a verifier.

15. A system for presenting a verifiable presentation to a verifier using a self-issued verifiable credentials, **characterized by**:
a secure element or trusted execution environment within or operatively coupled to an application operating within a client device;
a master verifiable credential template in a tamper-proof environment of the secure element or the trusted execution environment; and
one or more processors operatively coupled to memory having computer instructions which when executed by the one or more processors causes the one or more processors at the client device to perform the functions of:
receiving the master verifiable credential template;
generating and signing the self-issued verifiable credential in the tamper-proof environment responsive to a verifiable presentation request for the verifiable presentation from the verifier; and
presenting the verifiable presentation to the verifier using the self-issued credential, wherein the master verifiable credential template is a trusted application securely delegated by an issuer and executed inside the tamper-proof environment within the client device.
